# EUROPÄISCHE PATENTSCHRIFT

(11) **EP 2 758 694 B1**
(45) Veröffentlichungstag und Bekanntmachung des Hinweises auf die Patenterteilung: **12.08.2015**
(21) Anmeldenummer: 12759420.8
(22) Anmeldetag: 13.09.2012
(51) Int. Cl.: F16K 31/06

(54) **VENTIL MIT EINER ROLLBAHN UND WASSERFÜHRENDES HAUSHALTSGERÄT MIT SOLCH EINEM VENTIL**
VALVE COMPRISING A ROLLING SURFACE AND WATER-USING HOUSEHOLD APPLIANCE COMPRISING SUCH A VALVE
SOUPAPE À CHEMIN DE ROULEMENT ET APPAREIL MÉNAGER UTILISANT DE L'EAU DOTÉ D'UNE TELLE SOUPAPE

(30) Priorität: 23.09.2011 DE 102011083296
(43) Veröffentlichungstag der Anmeldung: 30.07.2014
(73) Patentinhaber: BSH Hausgeräte GmbH, 81739 München (DE)
(72) Erfinder: EGLMEIER, Hans, 10587 Berlin (DE)
(86) Internationale Anmeldenummer: PCT/EP2012/067890
(87) Internationale Veröffentlichungsnummer: WO 2013/041433

(56) Entgegenhaltungen:
- DE-A1- 10 145 070
- GB-A- 1 158 311
- JP-U- 52 160 130

## Beschreibung

Die Erfindung betrifft ein Ventil, insbesondere ein Kugelventil, mit zumindest einem Ventilraum und einem in dem Ventilraum angeordneten Ventilschließkörper, wobei dem Ventilraum ein Eingang, ein erster Ausgang und ein zweiter Ausgang zugeordnet sind und wobei der Ventilschließkörper von einer magnetischen Betätigungseinrichtung an den ersten Ausgang oder den zweiten Ausgang verstellbar ist, sowie ein wasserführendes Haushaltsgerät mit solch einem Ventil.

Speziell betrifft die Erfindung das Gebiet der Wäschebehandlungsgeräte zum Waschen und/oder Trocknen von Wäsche.

Aus der WO 2011/018385 A1 ist ein wasserführendes Haushaltsgerät mit einem Ventil der eingangs definierten Gattung bekannt. Dieses Ventil ist ein Schaltventil und umfasst einen Ventilraum, in den ein mit einer Eingangsleitung verbundener Eingang mündet. Außerdem sind ein erster Ausgang mit einer ersten Ventilsitzfläche und ein zweiter Ausgang mit einer zweiten Ventilsitzfläche an dem Schaltventil vorgesehen. Eine magnetische Betätigungseinrichtung mit zwei Magnetspulen dient zum Betätigen eines Ventilschließkörpers des Schaltventils. Der Ventilschließkörper ist dabei in dem Ventilraum angeordnet und wirkt einerseits mit der ersten Ventilsitzfläche und andererseits mit der zweiten Ventilsitzfläche zu einem Dichtsitz zusammen. Eine der Magnetspulen der magnetischen Betätigungseinrichtung umschließt die erste Ventilsitzfläche umfänglich. Die andere Magnetspule der magnetischen Betätigungseinrichtung umschließt die zweite Ventilsitzfläche umfänglich. Außerdem weist der Ventilraum eine Mulde auf, die im unbestromten Zustand der Magnetelemente zum Aufnehmen des Ventilschließkörpers dient, wobei die Dichtsitze an den Ventilsitzflächen dann geöffnet sind.

Das aus der WO 2011/018385 A1 bekannte wasserführende Haushaltsgerät hat den Nachteil, dass die Realisierung der drei möglichen Betriebsmodi des Ventils in der Praxis nur mit hohem Aufwand möglich ist. Denn in der mittleren Stellung des kugelförmigen Ventilschließkörpers, in der sich der Ventilschließkörper in der Mulde des Ventilraums befindet, entstehen Wirbel in der Strömung des zugeführten Wassers, das hierbei beidseitig über die beiden geöffneten Dichtsitze abfließt. Durch die Aufteilung der Strömung an dem Ventilschließkörper entstehen an beiden Seiten Wirbel, die sich abwechselnd von der Oberfläche des Ventilschließkörpers lösen. Hierdurch wird der kugelförmige Ventilschließkörper zunächst leicht in Bewegung versetzt und anschließend kommt es zu einem Aufschaukeln der Bewegung. Hierdurch kann der kugelförmige Ventilschließkörper zu weit aus der erforderlichen Mittelstellung bewegt werden, so dass die Mittelstellung nicht mehr stabil gehalten werden kann. Eine denkbare Lösung dieses Problems erfordert eine entsprechend tiefe Ausgestaltung der Mulde für die Mittelstellung, was wiederum stärkere Magnetspulen erfordert. Dies erhöht die Kosten zur Herstellung des Schaltventils.

Ein Ventil gemäß dem Oberbegriff von Anspruch 1 wird aus der DE 101 45 070 A1 bekannt.

Aufgabe der Erfindung ist es, ein Ventil, das einen verbesserten Aufbau aufweist, und ein wasserführendes Haushaltsgerät mit einem verbesserten Aufbau zu schaffen. Speziell ist es eine Aufgabe der Erfindung, ein Ventil sowie ein wasserführendes Haushaltsgerät anzugeben, bei denen drei Betriebsmodi für das Ventil realisierbar sind, ohne dass der konstruktive Aufwand, insbesondere bezüglich der Magnetspulen, in wirtschaftlicher Hinsicht zu groß wird.

Die Aufgabe wird durch ein Ventil, das insbesondere als Kugelventil ausgestaltet ist und sich speziell für wasserführende Haushaltsgeräte eignet, gelöst, wobei zumindest ein Ventilraum und ein in dem Ventilraum angeordneter Ventilschließkörper vorgesehen sind, wobei dem Ventilraum ein Eingang, ein erster Ausgang und ein zweiter Ausgang zugeordnet sind, wobei der Ventilschließkörper von einer magnetischen Betätigungseinrichtung an den ersten Ausgang oder den zweiten Ausgang verstellbar ist, wobei zwischen dem ersten Ausgang und dem zweiten Ausgang eine umlaufende Rollbahn für den Ventilschließkörper vorgesehen ist und wobei eine den Ventilraum begrenzende Wand entlang der Rollbahn zumindest abschnittsweise nach außen ausgeformt ist. Ferner wird die Aufgabe durch ein wasserführendes Haushaltsgerät, das insbesondere als Wäschebehandlungsgerät zum Waschen und/oder Trocknen von Wäsche dient, mit solch einem Ventil gelöst.

Durch die in den Unteransprüchen aufgeführten Maßnahmen sind vorteilhafte Weiterbildungen des erfindungsgemäßen Ventils und des erfindungsgemäßen wasserführenden Haushaltsgeräts möglich.

Der Ventilschließkörper ist zumindest im Bereich der Rollbahn mittels der magnetischen Betätigungseinrichtung entlang einer Ventilachse verstellbar und die umlaufende Rollbahn verläuft bezüglich der Ventilachse in einer Umfangsrichtung. Hierbei ist es ferner vorteilhaft, dass der erste Ausgang und der zweite Ausgang zumindest näherungsweise auf der Ventilachse angeordnet sind. Der Eingang kann sich im Bereich der Rollbahn befinden. Wird über den Eingang ein Medium, insbesondere Frischwasser, in den Ventilraum geführt, dann wird der Ventilschließkörper in Bewegung versetzt, wenn die magnetische Betätigungseinrichtung deaktiviert ist. Hierbei wird der Ventilschließkörper durch den Wasserzulauf in eine umlaufende Rollbewegung entlang der Rollbahn versetzt. Durch die dabei auftretende Fliehkraft steht der den Ventilschließkörper zur Seite drängenden Strömungskraft eine rückhaltende Kraft entgegen. Diese rückhaltende Kraft ist durch die durch die laterale Bahnneigung gegebene Komponente des Fliehkraftvektors bestimmt. Da die Fliehkraft und die Strömungskraft beide etwa mit dem Quadrat der Strömungsgeschwindigkeit beziehungsweise dem Volumenstrom ansteigen, hängt das Verhalten des Ventils im Wesentlichen nur von der Dimensionierung und nicht von den betriebsabhängigen Parameterschwankungen ab. Somit kann der sich ohne Magnetfeld zunächst in der Ruheposition befindliche Ventilschließkörper zwischen den beiden Ausgängen stabilisiert werden. Das Frischwasser kann daher durch die beiden Ausgänge strömen und vorzugsweise einem Mischer zugeführt werden.

Vorteilhaft ist es auch, dass die Rollbahn zentrisch bezüglich der Ventilachse ausgestaltet ist. Hierbei kann eine gleichmäßig über den Umfang ausgestaltete Ausformung an der den Ventilraum begrenzenden Wand entlang der Rollbahn vorgesehen sein. Die Ventilachse ist hierbei vorzugsweise horizontal orientiert.

Vorteilhaft ist es allerdings auch, dass die Rollbahn exzentrisch bezüglich der Ventilachse ausgestaltet ist. Hierbei ist es ferner vorteilhaft, dass die Ventilachse in einer Einbaulage horizontal ausgerichtet ist und dass die exzentrische Rollbahn in der Einbaulage unten eine minimale Ausformung entlang der Rollbahn aufweist. Wenn sich der Ventilschließkörper in seiner Ruheposition unten an der Rollbahn befindet, dann ist die erforderliche magnetische Verstellkraft reduziert. Gleichzeitig kann über die ansonsten größere Ausformung eine zuverlässige Führung des Ventilschließkörpers auf der Rollbahn erfolgen.

Vorteilhaft ist es auch, dass der Eingang im Bereich der Rollbahn angeordnet ist und dass der Eingang zumindest näherungsweise tangential in die Rollbahn mündet. Bei Zuführen von Frischwasser über den Eingang wird hierdurch der Ventilschließkörper in eine schnelle umlaufende Rollbewegung versetzt. Hierbei ist es auch vorteilhaft, dass der Eingang außermittig in die Rollbahn mündet. Hierdurch kann die Bahn des Ventilschließkörpers unterbrechungsfrei gehalten werden. Denn hierdurch wird zumindest weitgehend ein Kontakt zwischen dem Ventilschließkörper und der Rollbahn aufrechterhalten. Möglich ist es allerdings auch, dass der Eingang mittig in die Rollbahn mündet. Hierdurch kann eine gleichmäßigere und gegebenenfalls stärkere Strömung auf den Ventilschließkörper einwirken, um diesen in die umlaufende Rollbewegung zu versetzen.

In vorteilhafter Weise ist eine Außenseite des Ventilschließkörpers in Form einer Kugeloberfläche ausgestaltet. Hierdurch kann speziell ein Kugelventil realisiert werden. Bei dieser Ausgestaltung kann der Ventilschließkörper insbesondere kugelförmig oder hohlkugelförmig ausgestaltet sein.

Vorteilhaft ist es ferner, dass die Rollbahn zumindest abschnittsweise nutförmig oder rillenförmig oder in Form einer Ausbuchtung nach außen ausgeformt ist. Hierdurch sind vorteilhafte Ausgestaltungen der Rollbahn möglich, in denen der Ventilschließkörper, insbesondere der kugelförmige Ventilschließkörper, bei seiner Rollbewegung geführt ist.

Für das Ventil und das wasserführende Haushaltsgerät können eine Einbaulage bzw. Betriebslage vorgegeben sein. Wenn das wasserführende Haushaltsgerät zur Vorbereitung eines Betriebs beispielsweise in einem Privathaushalt aufgestellt wird, dann befindet sich das wasserführende Haushaltsgerät in einer Betriebslage. In der Betriebslage sind die einzelnen Bauteile des wasserführenden Haushaltsgeräts dann geeignet ausgerichtet, was in der Regel funktionsrelevant ist. Das Ventil ist hierbei gegebenenfalls in einer bestimmten Einbaulage in dem wasserführenden Haushaltsgerät montiert. In der Betriebslage kann beispielsweise in eine Einspülschale geführtes Frischwasser durch einen Verbindungskanal nach unten in einen Laugenbehälter laufen. Ferner befindet sich dann noch ein Ausgang des Laugenbehälters an seinem bezüglich der Schwerkraft tiefsten Punkt, so dass über den Ausgang des Laugenbehälters ein Abpumpen der Lauge möglich ist. Das Ventil des wasserführenden Haushaltsgeräts ist in Bezug auf diese vorgegebene Betriebslage ausgerichtet. Vorzugsweise ist die Ventilachse des Ventils dann horizontal ausgerichtet.

Bevorzugte Ausführungsbeispiele der Erfindung sind in der nachfolgenden Beschreibung anhand der Figuren der beigefügten Zeichnung, in denen sich entsprechende Elemente mit übereinstimmenden Bezugszeichen versehen sind, näher erläutert. Es zeigen:
- Fig. 1: ein wasserführendes Haushaltsgerät mit einem Ventil in einer auszugsweisen, schematischen Schnittdarstellung entsprechend einem ersten Ausführungsbeispiel;
- Fig. 2: das in Fig. 1 dargestellte Ventil in einer auszugsweisen, schematischen Schnittdarstellung entlang der mit II bezeichneten Schnittlinie entsprechend dem ersten Ausführungsbeispiel und
- Fig. 3: das in Fig. 1 dargestellte Ventil eines wasserführenden Haushaltsgeräts in einer schematischen Schnittdarstellung entsprechend einem zweiten Ausführungsbeispiel.

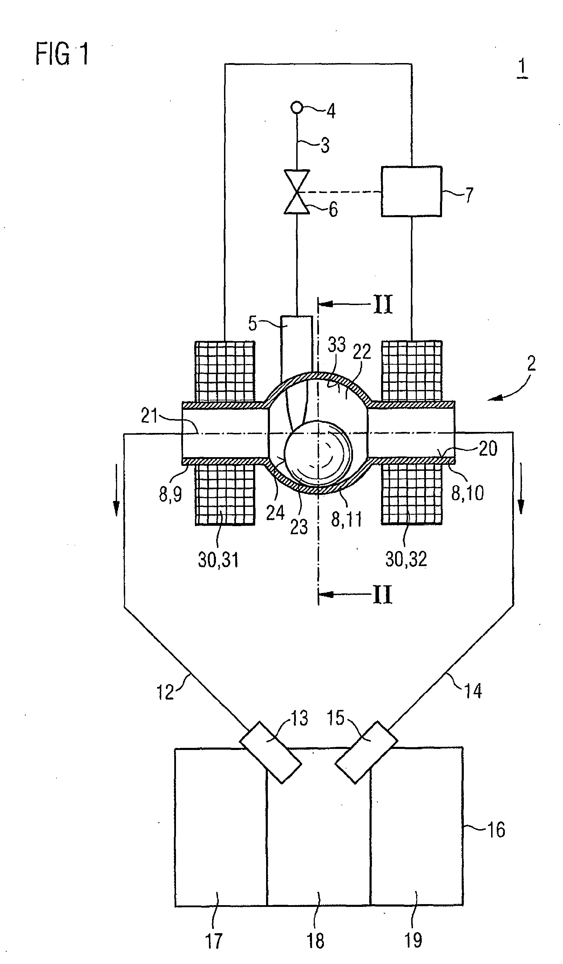

Fig. 1 zeigt ein wasserführendes Haushaltsgerät 1 mit einem Ventil 2 in einer auszugsweisen, schematischen Schnittdarstellung entsprechend einem ersten Ausführungsbeispiel. Das wasserführende Haushaltsgerät 1 kann insbesondere als Wäschebehandlungsgerät ausgestaltet sein und zum Waschen und/oder Trocknen von Wäsche dienen. Speziell kann das wasserführende Haushaltsgerät 1 als Waschmaschine oder Waschtrockner ausgestaltet sein. Das Ventil 2 eignet sich besonders für solch ein wasserführendes Haushaltsgerät 1. Das wasserführende Haushaltsgerät 1 und das Ventil 2 eignen sich allerdings auch für andere Anwendungsfälle.

Das wasserführende Haushaltsgerät 1 weist eine Leitung 3 auf, die vorzugsweise als Frischwasserleitung 3 ausgestaltet ist. Die Leitung 3 ist einerseits mit einem Anschluss 4 einer Wasserleitung einer Hausinstallation verbindbar. Andererseits ist die Leitung 3 mit einem Eingang 5 des Ventils 2 verbunden. In der Leitung 3 ist ein Sperrventil 6 angeordnet, das von einer Steuerung 7 ansteuerbar ist.

Das Ventil 2 weist ein Gehäuse 8 auf, an dem ein erster Ausgang 9 und ein zweiter Ausgang 10 vorgesehen sind. Ferner weist das Gehäuse 8 ein Mittelteil 11 auf. Der erste Ausgang 9 ist über eine Leitung 12 mit einer Düse 13 verbunden. Ferner ist der zweite Ausgang 10 über eine Leitung 14 mit einer Düse 15 verbunden. Die Düsen 13, 15 sind einer Einspülschale 16 mit drei Kammern 17, 18, 19 zugeordnet.

Innerhalb des Gehäuses 8 des Ventils 2 ist eine Wand 20 ausgestaltet, die in diesem Ausführungsbeispiel rotationssymmetrisch zu einer Ventilachse 21 des Ventils 2 ausgestaltet ist. In dem Mittelteil 11 des Gehäuses 8 ist die Wand 20 nach außen ausgeformt. Die Wand 20 begrenzt hierbei einen Ventilraum 22 des Ventils 2, in dem ein Ventilschließkörper 23 angeordnet ist.

Der Ventilschließkörper 23 weist eine Außenseite 24 auf, die in diesem Ausführungsbeispiel in Form einer Kugeloberfläche 24 ausgestaltet ist. Der Ventilschließkörper 23 kann insbesondere kugelförmig oder hohlkugelförmig ausgestaltet sein.

Das Ventil 2 weist außerdem eine magnetische Betätigungseinrichtung 30 mit einer ersten Magnetspule 31 und einer zweiten Magnetspule 32 auf. Die erste Magnetspule 31 ist hierbei dem ersten Ausgang 9 zugeordnet. Die zweite Magnetspule 32 ist dem zweiten Ausgang 10 zugeordnet. Durch Bestromen der ersten Magnetspule 31 wird der Ventilschließkörper 23 an den ersten Ausgang 9 verstellt, so dass dieser geschlossen ist. Entsprechend kann durch Bestromen der zweiten Magnetspule 32 der Ventilschließkörper 23 an den zweiten Ausgang 10 verstellt werden, um den zweiten Ausgang zu verschließen. Auf diese Weise kann bei geöffnetem Sperrventil 6 das zugeführte Frischwasser entweder über die Leitung 12 zu der Düse 13 oder über die Leitung 14 zu der Düse 15 geführt werden.

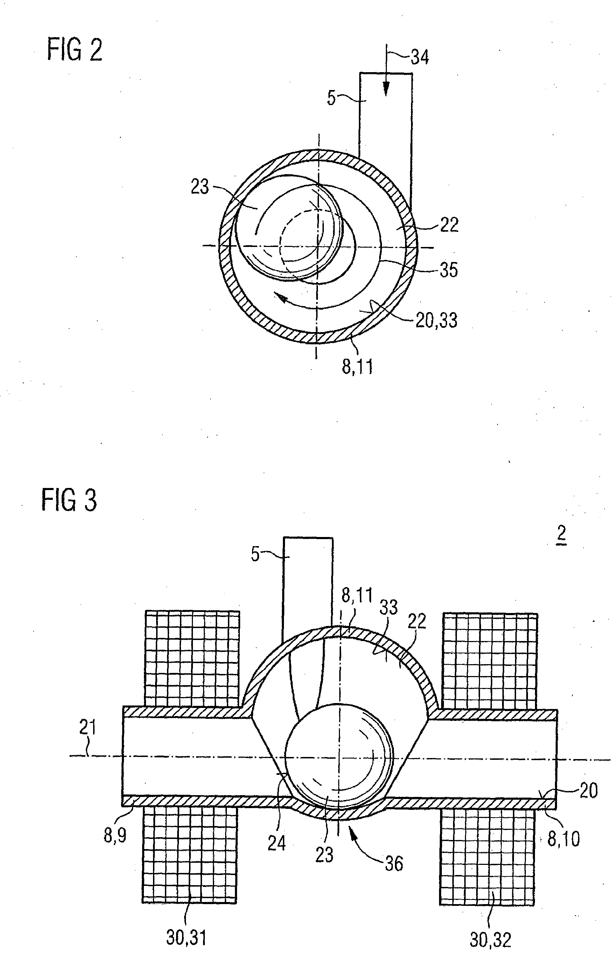

In der Fig. 1 ist eine mittlere Position des Ventilschließkörpers 23 dargestellt. Wird nun das Sperrventil 6 geöffnet, dann strömt das zugeführte Wasser in den Ventilraum 22, so dass der Ventilschließkörper 23 in eine umlaufende Rollbewegung versetzt wird. Dies ist im Folgenden auch unter Bezugnahme auf die Fig. 2 näher beschrieben.

Fig. 2 zeigt das in Fig. 1 dargestellte Ventil 2 in einer schematischen Schnittdarstellung entlang der mit II bezeichneten Schnittlinie. In dem Mittelteil 11 ist an der Wand 20 eine Rollbahn 33 ausgestaltet. Hierbei ist die Wand 20 im Bereich der Rollbahn 33 nach außen ausgeformt. Der Eingang 5 mündet im Bereich der Rollbahn 33 tangential in die Rollbahn 33 und somit den Ventilraum 22. Wie durch den Pfeil 34 veranschaulicht, wird Frischwasser bei geöffnetem Sperrventil 6 zugeführt, so dass der Ventilschließkörper 23 in eine umlaufende Rollbewegung versetzt wird. Dies ist durch den Pfeil 35 veranschaulicht. Die Rollbahn 33 ist in diesem Ausführungsbeispiel in Form einer Ausbuchtung nach außen ausgeformt. Durch die Fliehkraft wird der kugelförmige Ventilschließkörper 23 bei seiner umlaufenden Rollbewegung hierdurch in der Rollbahn 33 stabilisiert.

Die Rollbahn 33 kann auch nutförmig oder rillenförmig nach außen ausgeformt sein. Dies ist eine bevorzugte Ausführungsform für die Gestaltung der Rollbahn 33. Besonders bevorzugt ist eine Nut mit z.B. einem Rechteckquerschnitt, in der Mitte des Ventilgehäuses komplett umlaufend. Die Breite der Nut ist vorzugsweise kleiner als der Kugeldurchmesser des Ventilschließkörpers 23, die Tiefe der Nut ist vorzugsweise zumindest im Bereich des Wassereinlaufs tiefer, als der in die Nut ragende Kugelteil. Der Ventilverschließkörper 23 rollt daher auf den beiden Übergangskanten zwischen Nut und Ventilgehäuse der Nut. Bevorzugt sind diese Kanten durch Fasen (Neigung der Nutflanken, auch z.B. V-förmige Nuten geeignet) an die Rollbewegung des Ventilschließkörpers 23 angepasst (etwa einige mm breite Fasen, zueinander z.B. unter 90° geneigt, tangentiale Anlage des Ventilschließkörpers 23 ermöglichend). Die Einleitung des Frischwassers erfolgt tangential im Nutgrund. Durch den Abstand zwischen Ventilschließkörper 23 und Nutgrund rollte der Ventilschließkörper 23 nicht direkt über den Wassereinlass, sondern in einem konstruktiv gegebenen Abstand darüber. Die Anströmung des Ventilschließkörpers 23 und des Ventils ist dadurch absolut symmetrisch, die Störung des Wassereinlaufs durch den Ventilschließkörper-Kugelumlauf und die Asymmetrie bei beidseitigem Wasserauslass sind minimiert.

Wie in der Fig. 1 veranschaulicht, ist der Eingang 5 außermittig zu der Rollbahn 33 angeordnet. Hierdurch wird eine gleichmäßige Bewegung des Ventilschließkörpers 23 auf seiner Rollbahn 33 ermöglicht, bei der ein Kontakt zwischen dem Ventilschließkörper 23 und der Rollbahn 33 zumindest weitgehend erzielt ist. Der den Ventilschließkörper 23 in die umlaufende Rollbewegung versetzende Wasserfluss führt daher nicht zum Ablösen des Ventilschließkörpers 23 von der Rollbahn 33.

Allerdings kann der Eingang 5 auch mittig bezüglich der Rollbahn 33 angeordnet sein. Hierdurch wird eine symmetrische Einleitung des zulaufenden Volumenstroms für eine symmetrische Verteilung des Frischwassers auf die beiden Ausgänge 9, 10 und für einen eindeutigen Kugelanlauf ermöglicht.

Somit kann der Ventilschließkörper 23 auf der Rollbahn 33 gehalten werden, so dass das zugeführte Wasser über die beiden Ausgänge 9, 10 fließt und über die beiden Düsen 13, 15 austritt. Die Düsen 13, 15 sind hierbei so zueinander positioniert, dass das zusammengemischte Wasser in die Kammer 18 der Einspülschale 16 gelangt. Somit kann jede der Kammern 17, 18, 19 der Einspülschale 16 angewählt werden.

Nachdem die gewünschte Position des Ventilschließkörpers 23, nämlich an dem ersten Ausgang 9 oder dem zweiten Ausgang 10 oder in dem Mittelteil 11, bestimmt ist, kann das Sperrventil 6 geöffnet werden. Befindet sich der Ventilschließkörper 23 entweder an dem ersten Ausgang 9 oder dem zweiten Ausgang 10, dann wird der Ventilschließkörper 23 durch den Wasserdruck fixiert. Die jeweilige Magnetspule 31, 32 kann somit wieder abgeschaltet werden. In der mittleren Position ist ohnehin keine Bestromung der Magnetspulen 31, 32 erforderlich. Somit reduziert sich der Energieverbrauch. Außerdem kann durch die reduzierte Wärmeentwicklung der in den Magnetspulen 31, 32 enthaltene Kupferanteil reduziert werden.

Bei dem anhand der Figuren 1 und 2 beschriebenen Ausführungsbeispiel ist die Rollbahn 33 zentrisch beziehungsweise rotationssymmetrisch bezüglich der Ventilachse 21 des Ventils 2 ausgestaltet. Hierdurch wird ein gleichmäßiges Laufverhalten des Ventilschließkörpers 23 auf der Rollbahn 33 ermöglicht. Die Ventilachse 21 ist hierbei vorzugsweise horizontal ausgerichtet. Die Einbaulage für das Ventil 2 ist daher so vorgegeben, dass im montierten Zustand eine horizontal ausgerichtete Ventilachse 21 erzielt ist, wenn sich das wasserführende Haushaltsgerät 1 in seiner Betriebslage befindet.

Fig. 3 zeigt das in Fig. 1 dargestellte Ventil 2 eines wasserführenden Haushaltsgeräts 1 in einer schematischen Schnittdarstellung entsprechend einem zweiten Ausführungsbeispiel. In diesem Ausführungsbeispiel ist die Rollbahn 33 exzentrisch bezüglich der Ventilachse 21 ausgestaltet. Die Ventilachse 21 ist in der Einbaulage horizontal ausgerichtet. Außerdem weist die exzentrische Rollbahn 33 in der Einbaulage unten eine minimale Ausformung 36 entlang der Rollbahn 33 auf.

Wie bei dem ersten Ausführungsbeispiel ist auch bei diesem Ausführungsbeispiel der Ventilschließkörper 23 mittels der magnetischen Betätigungseinrichtung 30 entlang der Ventilachse 21 verstellbar. Die umlaufende Rollbahn 33 verläuft bezüglich der Ventilachse 21 in einer Umfangsrichtung 35. Durch die minimale Ausformung 36 im unteren Bereich der Wand 20 wird allerdings die zum Verstellen benötigte Magnetkraft im Ruhezustand des Ventilschließkörpers 23 deutlich reduziert. Somit ist die Magnetkraft verringert, die benötigt wird, um den Ventilschließkörper 23 an einen der Ausgänge 9, 10 beziehungsweise den jeweiligen Dichtsitz zu bewegen. Speziell bei einem Ventilschließkörper 23, der eine Außenseite 24 in Form einer Kugeloberfläche 24 aufweist, können hierdurch sehr geringe Verstellkräfte ausreichen. Wenn ein zuverlässiger Anlauf des kugelförmigen Ventilschließkörpers 23 am Beginn der Rotationsbewegung erzielt werden kann, dann kann die minimale Ausformung 36 ganz oder fast ganz verschwinden. Die erforderliche Magnetkraft kann daher auf einen Wert nahe null getrimmt werden, was ein weiteres Minimieren der in den Magnetspulen 31, 32 benötigten Kupfermengen zulässt.

Somit kann ein Ventil 2, insbesondere ein Kugelventil 2, geschaffen werden, das bei einer einfachen und sehr kompakten Bauart eine selbsthaltende Wasserweiche zur Versorgung von bis zu drei Wasserkanälen zulässt. Hierbei ist eine sehr gute und fehlertolerante Stabilisierung der Schaltzustände des Ventils 2, insbesondere der Mittelposition auf der Rollbahn 33, möglich.

### Bezugszeichenliste

- 1: Wasserführendes Haushaltsgerät
- 2: Ventil
- 3: Leitung
- 4: Anschluss
- 5: Eingang
- 6: Sperrventil
- 7: Steuerung
- 8: Gehäuse
- 9, 10: Ausgang
- 11: Mittelteil
- 12: Leitung
- 13: Düse
- 14: Leitung
- 15: Düse
- 16: Einspülschale
- 17 bis 19: Kammer
- 20: Wand
- 21: Ventilachse
- 22: Ventilraum
- 23: Ventilschließkörper
- 24: Außenseite
- 30: magnetische Betätigungseinrichtung
- 31, 32: Magnetspule
- 33: Rollbahn
- 34: Pfeil
- 35: Pfeil (Umfangsrichtung)
- 36: minimale Ausformung

## Patentansprüche

1. Ventil (2), mit zumindest einem Ventilraum (22) und einem in dem Ventilraum (22) angeordneten Ventilschließkörper (23), wobei dem Ventilraum (22) ein Eingang (5), ein erster Ausgang (9) und ein zweiter Ausgang (10) zugeordnet sind und wobei der Ventilschließkörper (23) von einer magnetischen Betätigungseinrichtung (30) an den ersten Ausgang (9) oder den zweiten Ausgang (10) verstellbar ist, wobei zwischen dem ersten Ausgang (9) und dem zweiten Ausgang (10) eine umlaufende Rollbahn (33) für den Ventilschließkörper (23) vorgesehen ist und wobei eine den Ventilraum (22) begrenzende Wand (20) entlang der Rollbahn (33) zumindest abschnittsweise nach außen ausgeformt ist, **dadurch gekennzeichnet, dass** der Ventilschließkörper (23) zumindest im Bereich der Rollbahn (33) mittels der magnetischen Betätigungseinrichtung (30) entlang einer Ventilachse (21) verstellbar ist und dass die umlaufende Rollbahn (33) bezüglich der Ventilachse (21) in einer Umfangsrichtung (35) verläuft.

2. Ventil (2) nach Anspruch 1, **dadurch gekennzeichnet, dass** der erste Ausgang (9) und der zweite Ausgang (10) zumindest näherungsweise auf der Ventilachse (21) angeordnet sind.

3. Ventil (2) nach Anspruch 1 oder 2, **dadurch gekennzeichnet, dass** die Rollbahn (33) zentrisch bezüglich der Ventilachse (21) ausgestaltet ist.

4. Ventil (2) nach Anspruch 1 oder 2, **dadurch gekennzeichnet, dass** die Rollbahn (33) exzentrisch bezüglich der Ventilachse (21) ausgestaltet ist.

5. Ventil (2) nach Anspruch 4, **dadurch gekennzeichnet, dass** die Ventilachse (21) in einer Einbaulage horizontal ausgerichtet ist und dass die exzentrische Rollbahn (33) in der Einbaulage unten eine minimale Ausformung (36) entlang der Rollbahn (33) aufweist.

6. Ventil (2) nach einem der Ansprüche 1 bis 5, **dadurch gekennzeichnet, dass** der Eingang (5) im Bereich der Rollbahn (33) angeordnet ist und dass der Eingang (5) zumindest näherungsweise tangential in die Rollbahn (33) mündet.

7. Ventil (2) nach Anspruch 6, **dadurch gekennzeichnet, dass** der Eingang (5) außermittig in die Rollbahn (33) mündet.

8. Ventil (2) nach Anspruch 6, **dadurch gekennzeichnet, dass** der Eingang (5) mittig in die Rollbahn (33) mündet.

9. Ventil (2) nach einem der Ansprüche 1 bis 8, **dadurch gekennzeichnet, dass** eine Außenseite (24) des Ventilschließkörpers (23) in Form einer Kugeloberfläche (24) ausgestaltet ist.

10. Ventil (2) ach einem der Ansprüche 1 bis 9, **dadurch gekennzeichnet, dass** die Rollbahn (33) zumindest abschnittsweise nutförmig oder rillenförmig oder in Form einer Ausbuchtung nach außen ausgeformt ist.

11. Wasserführendes Haushaltsgerät (1), insbesondere Wäschebehandlungsgerät (1) zum Waschen und/oder Trocknen von Wäsche, mit einem Ventil (2) nach einem der Ansprüche 1 bis 10.

## Claims

1. Valve (2), with at least one valve space (22) and a valve sealing element (23) disposed in said valve space (22), wherein the valve space (22) is assigned an inlet (5), a first outlet (9) and a second outlet (10) and wherein the valve sealing body (23) is able to be moved to the first outlet (9) or the second outlet (10) by a magnetic actuation device (30), wherein a circumferential roll track (33) for the valve sealing element (23) is provided between the first outlet (9) and the second outlet (10) and wherein a wall (20) delimiting the valve space (22) is formed at least in sections on the outside along the roll track (33), **characterised in that** the valve sealing element (23), at least in the region of the roll track (33), is able to be moved by means of the magnetic actuation device (30) along a valve axis (21) and that the circumferential roll track (33) runs in a circumferential direction (35) relative to the valve axis (21).

2. Valve (2) according to claim 1, **characterised in that** the first outlet (9) and the second outlet (10) are disposed at least approximately on the valve axis (21).

3. Valve (2) according to claim 1 or 2, **characterised in that** the roll track (33) is embodied centrally relative to the valve axis (21).

4. Valve (2) according to claim 1 or 2, **characterised in that** the roll track (33) is embodied eccentrically relative to the valve axis (21).

5. Valve (2) according to claim 4, **characterised in that** the valve axis (21) is aligned horizontally in an installation position and that the eccentric roll track (33), underneath in the installation position, has a minimal form (36) along the roll track (33).

6. Valve (2) according to one of claims 1 to 5, **characterised in that** the inlet (5) is disposed in the region of the roll track (33) and that the inlet (5) opens at least approximately tangentially into the roll track (33).

7. Valve (2) according to claim 6, **characterised in that** the inlet (5) opens eccentrically into the roll track (33).

8. Valve (2) according to claim 6, **characterised in that** the inlet (5) opens centrally into the roll track (33).

9. Valve (2) according to one of claims 1 to 8, **characterised in that** an outer side (24) of the valve sealing element (23) is embodied in the form of a spherical surface (24).

10. Valve (2) according to one of claims 1 to 9, **characterised in that** the roll track (33) is formed, at least in sections, in the shape of a groove or in the shape of a gutter or in the shape of a protrusion towards the outside.

11. Water-conducting domestic appliance (1), in particular laundry treatment appliance (1) for washing and/or drying laundry, with a valve (2) according to one of claims 1 to 10.

## Revendications

1. Soupape (2), avec au moins une chambre de soupape (22) et un corps de fermeture de soupape (23) disposé dans la chambre de soupape (22), dans laquelle à la chambre de soupape (22) sont associées une entrée (5), une première sortie (9) et une deuxième sortie (10) et dans laquelle le corps de fermeture de soupape (23) peut être déplacé par un dispositif d'actionnement magnétique (30) vers la première sortie (9) ou la deuxième sortie (10), dans laquelle entre la première sortie (9) et la deuxième sortie (10) est prévu un chemin de roulement (33) pour le corps de fermeture de soupape (23) et dans laquelle une paroi (20) délimitant la chambre de soupape (22) est façonnée le long du chemin de roulement (33) au moins partiellement vers l'extérieur, **caractérisée en ce que** le corps de fermeture de soupape (23) peut être déplacé au moins dans la zone du chemin de roulement (33) au moyen du dispositif d'actionnement magnétique (30) le long d'un axe de soupape (21) et **en ce que** le chemin de roulement circonférentiel (33) s'étend dans une direction circonférentielle (35).

2. Soupape (2) selon la revendication 1, **caractérisée en ce que** la première sortie (9) et la deuxième sortie (10) sont disposées au moins de manière rapprochée sur l'axe de soupape (21).

3. Soupape (2) selon la revendication 1 ou 2, **caractérisée en ce que** le chemin de roulement (33) est conçu centré par rapport à l'axe de soupape (21).

4. Soupape (2) selon la revendication 1 ou 2, **caractérisée en ce que** le chemin de roulement (33) est conçu excentré par rapport à l'axe de soupape (21).

5. Soupape (2) selon la revendication 4, **caractérisée en ce que** l'axe de soupape (21) est orienté horizontalement dans une position de montage et **en ce que** le chemin de roulement excentrée (33) présente en position de montage dans le bas un façonnage minimal (36) le long du chemin de roulement (33).

6. Soupape (2) selon l'une des revendications 1 à 5, **caractérisée en ce que** l'entrée (5) est disposée dans la zone du chemin de roulement (33) et **en ce que** l'entrée (5) débouche au moins de manière rapprochée tangentiellement dans le chemin de roulement (33).

7. Soupape (2) selon la revendication 6, **caractérisée en ce que** l'entrée (5) débouche de manière excentrée dans le chemin de roulement (33).

8. Soupape (2) selon la revendication 6, **caractérisée en ce que** l'entrée (5) débouche de manière centrée dans le chemin de roulement (33).

9. Soupape (2) selon l'une des revendications 1 à 8, **caractérisée en ce qu'**un côté externe (24) du corps de fermeture de soupape (23) est conçu en forme de surface sphérique (24).

10. Soupape (2) selon l'une des revendications 1 à 9, **caractérisée en ce que** le chemin de roulement (33) est façonné au moins partiellement en forme de rainure ou en forme de sillon ou bien en forme de bombement vers l'extérieur.

11. Appareil électroménager conducteur d'eau (1), en particulier appareil de traitement du linge (1) destiné au lavage et/ou au séchage du linge, avec une soupape (2) selon l'une des revendications 1 à 10.
